# EUROPÄISCHE PATENTANMELDUNG

(11) **EP 1 552 982 A2**
(43) Veröffentlichungstag der Anmeldung: **13.07.2005**
(21) Anmeldenummer: 05000188.2
(22) Anmeldetag: 06.01.2005
(51) Int. Cl.: B60P 1/56, B60P 1/64

(54) **Fahrzeug zum Transport von Gütern**

(30) Priorität: 09.01.2004 DE 202004000312 U
(71) Anmelder: mst Mineral-Speditions- und Transport-GmbH, 50169 Kerpen (DE)
(72) Erfinder: Freund, Wolfgang Günther, verstorben (DE)
(74) Vertreter: Sternagel, Fleischer, Godemeyer & Partner Patentanwälte

(57) **Zusammenfassung**

Bei einem Fahrzeug zum Transport von mehreren Gütern, wobei zumindest drei Behältnisse (8, 9, 10) vorgesehen sind, von denen ein erstes und ein letztes Behältnis (8, 9) und zumindest ein weiteres Behältnis (10) zwischen dem ersten und dem letzten Behältnis hintereinander angeordnet sind, ist das zumindest eine zwischen dem ersten und dem letzten Behältnis (8, 9) angeordnete Behältnis ein pneumatisch entladbares Silo-Behältnis (10).

## Beschreibung

Die Erfindung betrifft ein Fahrzeug zum Transport von mehreren Gütern, wobei zumindest drei Behältnisse vorgesehen sind, von denen ein erstes und ein letztes Behältnis und zumindest ein weiteres Behältnis zwischen dem ersten und dem letzten Behältnis hintereinander angeordnet sind.

Derartige Fahrzeuge sind beispielsweise aus der EP 0 587 063 B1 bekannt. Darin sind auf einem Rahmengestell hintereinander drei Schüttgut-Container angeordnet, von denen der erste und der letzte seitlich kippbar ist und der mittlere ein Trichterbehälter ist mit einem oder mehreren unteren Auslässen. Der mittlere Schüttgut-Container bzw. Trichterbehälter weist eine Ladekapazität auf, die etwa der Summe der Ladekapazitäten der davor und dahinter angeordneten Schüttgut-Container entspricht. Durch Vorsehen der verschiedenen Schüttgut-Container, die jeweils getrennt befüllt und entladen werden können, ist es möglich, einen Teil der Schüttgut-Container auf einer Tour mit einem Schüttgut-Produkt und den anderen Teil auf einer anderen Tour mit anderen Schüttgut-Produkten zu beladen. Hierdurch ist es zwar vorteilhaft möglich, unterschiedliche Materialien auf einer Hinfahrt und einer Rückfahrt eines Lastkraftwagens mitzuführen, jedoch erweist sich ein Wechsel der mitgeführten Produkte dennoch teilweise als problematisch, da zunächst die Behälter gereinigt werden müssen und erst nachfolgend ein Wechsel des zu transportierenden Gutes möglich ist.

Der vorliegenden Erfindung liegt daher die Aufgabe zugrunde, ein Fahrzeug zum Transport von mehreren Gütern zu schaffen, mit dem ein besonders schneller und möglichst rückstandsfreier Wechsel von zu transportierenden Gütern möglich ist.

Die Aufgabe wird durch ein Fahrzeug zum Transport von mehreren Gütern nach dem Oberbegriff des Anspruchs 1 dadurch gelöst, dass das zumindest eine zwischen dem ersten und dem letzten Behältnis angeordnete Behältnis ein pneumatisch entladbares Silobehältnis ist. Weiterbildungen der Erfindung sind in den abhängigen Ansprüchen definiert.

Dadurch wird ein Fahrzeug geschaffen, mit dem auch ein schnelles Entladen eines mittleren zwischen dem ersten und letzten Behältnis angeordneten Behältnisses möglich ist, im Unterschied zu der Verwendung eines Trichterbehälters, wie er im Stand der Technik der EP 0 587 063 B1 beschrieben ist. Durch das Vorsehen eines Silobehältnisses, das pneumatisch entladen werden kann, ist nicht nur ein schnelles, sondern auch ein sehr gründliches Entladen sogar feucht gewordener Güter möglich. An den Wandungen des Silobehältnisses anhaftende Güter, insbesondere Quarzsand, können durch das Vorsehen einer pneumatischen Entladung im Wesentlichen rückstandsfrei aus dem Silobehältnis entfernt werden. Bei der pneumatischen Förderung von Gütern aus einem Silobehältnis heraus erfolgt eine sog. Flugförderung bei hohen Gasgeschwindigkeiten und einer verhältnismäßig geringen Feststoffbeladung. Hierbei bewegen sich die Partikel der Feststoffe nahezu mit Gasgeschwindigkeit. Das Silobehältnis ist bevorzugt mit einer Einrichtung zur pneumatischen Entladung versehen. Diese wird in dem Förderweg der Güter angeordnet. Um das in dem Silobehältnis befindliche Gut, insbesondere Quarzsand, optimal fördern zu können, wird dieses unter Druck gesetzt. In diesem Falle ist das Silobehältnis vorzugsweise als Druckbehälter ausgebildet. Die Einrichtung zur pneumatischen Entladung kann dabei ein Gebläse umfassen und/oder eine Pumpe zum Erzeugen eines Unterdrucks in dem Silobehältnis. Insbesondere ist eine Zellenradschleuse vorgesehen.

Als besonders vorteilhaft erweist es sich, das summierte Füllvolumen der ersten und letzten Behältnisse größer als das Füllvolumen des zumindest einen zwischen diesen angeordneten Behältnisses vorzusehen. Vorzugsweise ist das Füllvolumen des ersten und das Füllvolumen des letzten Behältnisses jeweils geringer als das Füllvolumen des zumindest einen zwischen diesen angeordneten Behältnisses. Wird beispielsweise in das erste und in das letzte Behältnis für eine Tour des Fahrzeugs ein Ton eingefüllt und in das mittlere Behältnis für eine andere Tour ein Quarzsand, erweist es sich hinsichtlich der Gewichtsverteilung als besonders vorteilhaft, wenn nicht nur das Füllvolumen des ersten und letzten mit Ton befüllten Behältnisses jeweils geringer als das Füllvolumen des dazwischen angeordneten mit Quarzsand gefüllten Silobehältnisses ist, sondern auch das summierte Füllvolumen des ersten und letzten Behältnisses größer als das Füllvolumen des zumindest einen dazwischen angeordneten Behältnisses in Form eines Silobehältnisses. Da üblicherweise pro Tour (Hinfahrt/Rückfahrt des Fahrzeugs) nur die ersten und letzten Behältnisse bzw. das mittlere oder die mittleren Behältnisse gefüllt werden, ergibt sich bei dieser Füllvolumenaufteilung ein maximal zulässiges Gesamtgewicht des Fahrzeugs pro Wegstrecke und zugleich eine optimale Füllung dieser Behältnisse, also Ausnutzung des vorhandenen Volumens der Behältnisse. Gerade aufgrund der bevorstehenden Einführung einer Maut für LKW können durch Vorsehen einer optimalen Befüllung der Fahrzeuge auf einer Hintour und auf einer Rücktour auf diese Weise Kosten eingespart werden. Durch Verwendung insbesondere einer Dreiteilung können in dem ersten und letzten Behältnis beispielsweise im Westerwaldgebiet Rohtone geladen und in das Rheinland befördert werden. Von dort kann nach dem Entladen der ersten und letzten Behältnisse in das mittlere Silobehältnis Quarzsand geladen werden, der im Westerwaldgebiet zur Herstellung von Baumaterialien benötigt wird.

Bevorzugt beträgt das Verhältnis des summierten Füllvolumens der ersten und letzten Behältnisse zu dem Füllvolumen des zumindest einen dazwischen angeordneten Behältnisses etwa 1,1:1 oder mehr, insbesondere 1,3:1 oder mehr. Besonders bevorzugt beträgt das Füllvolumenverhältnis 30 m³:23 m³. Das Füllvolumen des ersten und letzten Behältnisses beträgt dabei bevorzugt 15 m³, um ein ausgeglichenes Gewichtsverhältnis zwischen den beiden Enden des Fahrzeuges zu ermöglichen.

Vorzugsweise ist das erste und/oder letzte Behältnis ein Behältnis zur Aufnahme von Schüttgut und/oder ein Behältnis zur Aufnahme von Stückgut und/oder ein Behältnis zur Aufnahme von Flüssigkeiten. Um ein besonders gutes Entladen der ersten und letzten Behältnisse zu ermöglichen, sind diese vorzugsweise zu ihren jeweiligen Enden hin und/oder seitlich entleerbar, insbesondere ist das erste und/oder letzte Behältnis kippbar und über eine schwenkbar öffnbare Klappe entleerbar. Diese kann seitlich oder am Ende des jeweiligen Behältnisses vorgesehen werden. Grundsätzlich ist es auch möglich, sowohl seitlich als auch am hinteren bzw. vorderen Ende der Behältnisse eine solche Klappe vorzusehen. Für die Aufnahme von Stückgut kann lediglich eine Aufliegerplatte vorgesehen werden. Für die Aufnahme von Flüssigkeiten können Silobehälter oder ähnliche Flüssigkeitsaufnahmeeinrichtungen als erste und/oder letzte Behältnisse auf dem Fahrzeug vorgesehen werden.

Die zumindest drei Behältnisse können einerseits Teil eines Aufliegers für ein Zugfahrzeug sein, andererseits auch in den Rahmen eines solchen Fahrzeuges selbst integriert werden. Auch ist es möglich, insbesondere das erste und/oder letzte Behältnis austauschbar zu gestalten, um wechselweise Schüttgut, Stückgut und Flüssigkeiten transportieren zu können. Vorzugsweise wird dabei das mittlere Silobehältnis nicht ausgetauscht.

Das mittlere Silobehältnis besteht vorzugsweise aus Aluminium und weist besonders bevorzugt eine Kammer auf. Als Druckbehälter ist es bevorzugt für einen Betriebsdruck von 2 bar ausgelegt. Um eine Gleichmäßigkeit der äußeren Fläche der zumindest drei Behältnisse zu ermöglichen, kann das mittlere Silobehältnis beispielsweise mit einer Verkleidung durch Wandungen, die mit den seitlichen Wandungen der ersten und letzten Behältnisse fluchten, versehen werden.

Zur näheren Erläuterung der Erfindung wird im Folgenden ein Ausführungsbeispiel anhand der Zeichnung näher beschrieben. Diese zeigt in:

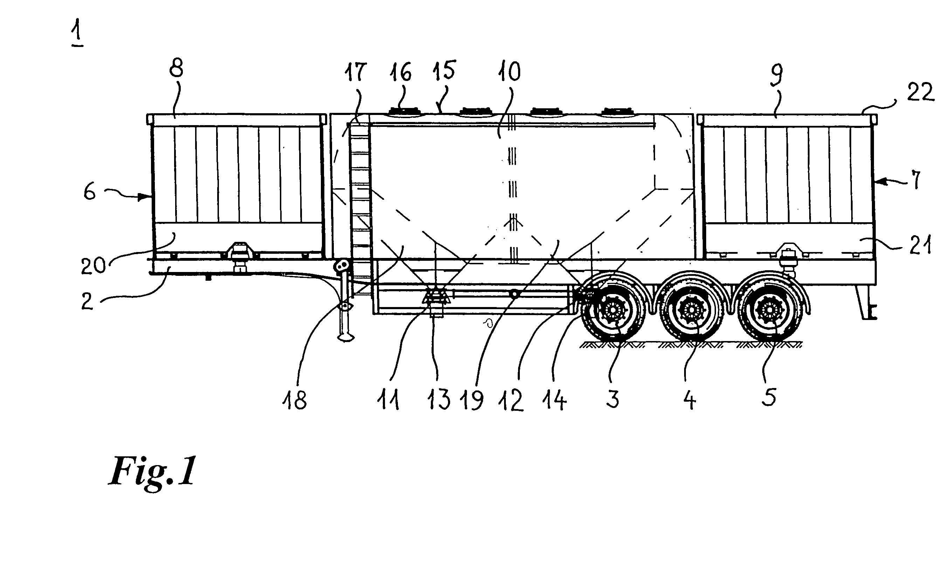

- Figur 1: eine Seitenansicht eines erfindungsgemäß ausgerüsteten Aufliegers für ein Fahrzeug zum Transport von mehreren Gütern mit einem mittleren Silobehältnis.

Figur 1 zeigt eine Seitenansicht eines erfindungsgemäß ausgerüsteten Aufliegers 1 für ein Zugfahrzeug, das in Figur 1 jedoch nicht dargestellt ist. Der Auflieger weist ein Rahmengestell 2 auf mit drei Fahrachsen 3, 4, 5. Die Fahrachsen sind in herkömmlicher Weise außermittig in der hinteren Hälfte des Aufliegers 1 angeordnet. Am vorderen zu dem Zugfahrzeug weisenden Ende 6 des Aufliegers ist auf dem Rahmengestell ein vorderes Schüttgutbehältnis 8 angeordnet. Am hinteren Ende 7 des Aufliegers ist auf dem Rahmengestell ein hinteres Schüttgutbehältnis 9 angeordnet. Zwischen dem vorderen und hinteren Schüttgutbehältnis 8, 9 ist ein Silobehältnis 10 angeordnet. Das Silobehältnis ist mit zwei Einrichtungen 11, 12 zur pneumatischen Entladung versehen. Diese sind im Bereich der unteren Auslässe 13, 14 des Silobehältnisses 10 angeordnet. Auf der Oberseite 15 des Silobehältnisses sind vier Mannlöcher 16 vorgesehen. Diese weisen jeweils klapp- und schwenkbare Domdeckel auf. Diese können druckdicht verschlossen und manuell betätigt werden. In bekannter Weise ist zum Hinaufsteigen auf das Silobehältnis eine Aufstiegsleiter 17 in Fahrtrichtung des Aufliegers links montiert.

Das Silobehältnis weist eine Kammer auf, die nach unten hin in zwei trichterförmige Endbereiche ausläuft. Diese trichterförmigen Bereiche 18, 19 laufen in die unteren Auslässe 13, 14 aus. Um ein gutes Auslaufen von dem in dem Silobehältnis gelagerten Material zu ermöglichen, sind die Wandungen der trichterförmigen Bereiche entsprechend schräg in einem Winkel von etwa 45° angeordnet. Zur Beschleunigung des Austrags des in dem Silobehältnis gelagerten Materials erfolgt das Entladen über eine pneumatische Förderung, insbesondere unter Zuhilfenahme eines Gebläses bzw. einer Zellenradschleuse. Hierdurch ist das restlose und rückstandsfreie Entleeren des Silobehältnisses möglich, wodurch eine Kontaminierung von nachfolgend eingefülltem Material mit dem zuvor in dem Silobehältnis transportierten Material vorteilhaft vermieden werden kann. Eine zusätzliche Reinigung des Silobehältnisses vor dem Nachfüllen eines neuen Materials kann unterbleiben, was wiederum eine Zeit- und somit eine Kostenersparnis bedeutet.

In dem in Figur 1 dargestellten Ausführungsbeispiel sind für das erste und letzte Behältnis 8, 9 Füllvolumina von 15 m³ vorgesehen, wohingegen das Silobehältnis ein Füllvolumen von 23 m³ aufweist. Bei der Befüllung des ersten und letzten Behältnisses mit dem gleichen oder einem Material mit entsprechender Dichte kann eine ausgewogene Belastung und Auslastung des Aufliegers ermöglicht werden, bei abwechselnder Füllung nur des ersten und letzten Behältnisses und des mittleren Behältnisses. Aufgrund des im Vergleich zu der Summe der Behältnisvolumina des ersten und letzten Behältnisses geringeren Füllvolumens des Silobehältnisses kann darin vorzugsweise ein Material mit höherer Dichte transportiert werden, ohne die maximal zulässige Zuladung des Fahrzeugs zu überschreiten.

Das in dem Silobehältnis gelagerte Material kann vor Feuchtigkeit von außen geschützt werden, da es in dem nach außen druckdichten Behältnis transportiert wird und für das vordere und hintere Schüttgutbehältnis 8, 9 sind Rollplanen 22 oder ähnliche Einrichtungen vorgesehen, um auch die darin transportierten Materialien vor Regen und Wind zu schützen. Ein Entladen der vorderen und hinteren Schüttgutbehältnisse ist beispielsweise über die schwenkbaren seitlichen Klappen 20, 21 möglich. Auch können am vorderen und hinteren Ende 6, 7 des Aufliegers an den Behältnissen 8, 9 derartige Klappen vorgesehen werden. Anstelle eines Schüttguts können in die beiden Behältnisse auch Stückgüter eingelegt werden. Grundsätzlich ist sogar die Verwendung von Silobehältnissen anstelle der vorderen und hinteren Schüttgutbehältnisse möglich, beispielsweise, um dort Flüssigkeiten transportieren zu können. Auch bei diesen wird dann vorzugsweise ein unterer Auslass vorgesehen, wobei bei dem vorderen Behältnis darauf geachtet wird, dass im Bereich der Befestigung des Aufliegers auf dem Zugfahrzeug kein solcher Auslass vorgesehen wird.

Neben dem im Vorstehenden beschriebenen und in der Figur dargestellten Ausführungsbeispiel von Fahrzeugen zum Transport von mehreren Gütern, können noch zahlreiche weitere gebildet werden, bei denen jeweils zwischen zumindest einem ersten und zumindest einem letzten Behältnis zumindest ein mittleres Behältnis angeordnet ist, das ein pneumatisch entladbares Silobehältnis ist und/oder bei dem das summierte Füllvolumen der ersten und letzten Behältnisse größer als das Füllvolumen des zumindest einen zwischen diesen angeordneten Behältnisses ist bzw. das Füllvolumen des ersten und das Füllvolumen des letzten Behältnisses jeweils geringer als das Füllvolumen des zumindest einen zwischen diesen angeordneten Behältnisses ist.

### Bezugszeichenliste

- 1: Auflieger
- 2: Rahmengestell
- 3: Fahrachse
- 4: Fahrachse
- 5: Fahrachse
- 6: vorderes Ende
- 7: hinteres Ende
- 8: vorderes Schüttgut-Behältnis
- 9: hinteres Schüttgut-Behältnis
- 10: Silo-Behältnis
- 11: Einrichtung zur pneumatischen Entladung
- 12: Einrichtung zur pneumatischen Entladung
- 13: unterer Auslass
- 14: unterer Auslass
- 15: Oberseite
- 16: Mannloch
- 17: Aufstiegsleiter
- 18: trichterförmiger Bereich
- 19: trichterförmiger Bereich
- 20: Klappe
- 21: Klappe
- 22: Rollplane

## Patentansprüche

1. Fahrzeug zum Transport von mehreren Gütern, wobei zumindest drei Behältnisse (8,9,10) vorgesehen sind, von denen ein erstes und ein letztes Behältnis (8,9) und zumindest ein weiteres Behältnis (10) zwischen dem ersten und dem letzten Behältnis hintereinander angeordnet sind,
**dadurch gekennzeichnet, dass**
das zumindest eine zwischen dem ersten und dem letzten Behältnis (8,9) angeordnete Behältnis ein pneumatisch entladbares Silo-Behältnis (10) ist.

2. Fahrzeug nach Anspruch 1,
**dadurch gekennzeichnet, dass**
das Silo-Behältnis (10) mit einer Einrichtung zur pneumatischen Entladung (11,12) versehen ist.

3. Fahrzeug nach Anspruch 2,
**dadurch gekennzeichnet, dass**
das Silo-Behältnis (10) ein Druckbehälter ist.

4. Fahrzeug nach Anspruch 2 oder 3,
**dadurch gekennzeichnet, dass**
die Einrichtung zur pneumatischen Entladung (11,12) ein Gebläse umfasst.

5. Fahrzeug nach einem der vorstehenden Ansprüche,
**dadurch gekennzeichnet, dass**
das summierte Füllvolumen der ersten und letzten Behältnisse (8,9) größer als das Füllvolumen des zumindest einen zwischen diesen angeordneten Behältnisses (10) ist.

6. Fahrzeug nach einem der vorstehenden Ansprüche,
**dadurch gekennzeichnet, dass**
das Füllvolumen des ersten (8) und das Füllvolumen des letzten Behältnisses (9) jeweils geringer als das Füllvolumen des zumindest einen zwischen diesen angeordneten Behältnisses (10) ist.

7. Fahrzeug nach einem der Ansprüche 5 oder 6,
**dadurch gekennzeichnet, dass**
das Verhältnis des summierten Füllvolumens der ersten und letzten Behältnisse (8,9) zu dem Füllvolumen des zumindest einen dazwischen angeordneten Behältnisses (10) etwa 1,1:1 oder mehr beträgt, insbesondere 1,3:1 oder mehr.

8. Fahrzeug nach Anspruch 7,
**dadurch gekennzeichnet, dass**
das Füllvolumenverhältnis 30 m³ : 23 m³ beträgt.

9. Fahrzeug nach einem der vorstehenden Ansprüche,
**dadurch gekennzeichnet, dass**
das erste (8) und/oder letzte (9) Behältnis ein Behältnis zur Aufnahme von Schüttgut und/oder ein Behältnis zur Aufnahme von Stückgut und/oder ein Behältnis zur Aufnahme von Flüssigkeiten ist.

10. Fahrzeug nach Anspruch 9,
**dadurch gekennzeichnet, dass**
das erste und/oder das letzte Behältnis (8,9) zu ihrem jeweiligen Ende hin und/oder seitlich entleerbar ist.

11. Fahrzeug nach Anspruch 9 oder 10,
**dadurch gekennzeichnet, dass**
das erste und/oder letzte Behältnis (8,9) kippbar und über eine schwenkbar öffenbare Klappe entleerbar ist.

12. Auflieger (1) für ein Fahrzeug nach einem der vorstehenden Ansprüche,
**dadurch gekennzeichnet, dass**
die zumindest drei Behältnisse (8,9,10) Teil des Aufliegers sind.
